# FASCICULE DE BREVET EUROPEEN

(11) **EP 0 856 635 B1**
(45) Date de publication et mention de la délivrance du brevet: **26.02.2003**
(21) Numéro de dépôt: 98810052.5
(22) Date de dépôt: 28.01.1998
(51) Int. Cl.: E06B 9/90, F16D 49/02, F16D 67/00

(54) **Frein agissant par expansion ou contraction d'un ressort hélicoidal**
Durch Expansion oder Kontraktion einer Schraubenfeder wirkende Bremse
Brake acting through expansion or contraction of a helical spring

(30) Priorité: 04.02.1997 FR 9701217
(43) Date de publication de la demande: 05.08.1998
(73) Titulaire: SOMFY, F-74300 Cluses (FR)
(72) Inventeur: Lagarde, Eric Paul, 74700 Sallanches (FR)
(74) Mandataire: Meylan, Robert Maurice

(56) Documents cités:
- EP-A- 0 109 066
- DE-A- 3 444 946
- DE-A- 3 504 489

## Description

La présente invention a pour objet un frein destiné à être monté entre un arbre menant et un arbre mené et comprenant une pièce cylindrique fixe, une pièce d'entrée présentant une partie en forme de secteur de cylindre concentrique à la pièce cylindrique, une pièce de sortie présentant une partie en forme de secteur de cylindre concentrique à la pièce cylindrique et s'étendant sur un angle inférieur à l'angle de la partie correspondante de la pièce d'entrée, de manière à être entraîné en rotation par la pièce d'entrée, et un ressort hélicoïdal monté concentriquement à la pièce cylindrique entre cette dernière et les parties cylindriques des pièces d'entrée et de sortie et dont le diamètre est tel que le ressort, au repos, est au moins approximativement en appui contre ladite pièce cylindrique et dont au moins une extrémité est coudée au moins approximativement radialement de manière à pouvoir être entraînée par lesdites parties en forme de secteur de cylindre, l'espace radial entre la pièce cylindrique et les pièces d'entrée et de sortie permettant une variation du diamètre du ressort, l'entraînement de l'extrémité du ressort par la pièce d'entrée ayant tendance à écarter le ressort de la pièce cylindrique, tandis que l'entraînement de cette extrémité, en sens inverse, par la pièce de sortie, a pour effet d'appliquer le ressort contre le carter, c'est-à-dire de freiner.

Un tel frein est décrit dans le document DE 35 04 489 où il est utilisé comme dispositif anti-retour. La pièce cylindrique est tubulaire et le ressort et les parties cylindriques des pièces d'entrée et de sortie sont montés à l'intérieur de cette pièce tubulaire, le ressort freinant en expansion.

De tels freins sont en outre couramment utilisés dans les entraînements motorisés de tubes d'enroulement de stores et de volets roulants. Le frein est disposé entre le réducteur et le tube d'enroulement. Le tube d'enroulement est généralement monté dans un caisson contre lequel vient buter la barre terminale du store ou la lame terminale du volet roulant, cette arrivée en butée coïncidant avec l'arrêt du moteur. Cette arrivée en butée se traduit en outre par une mise sous tension du store ou du volet roulant , tension qui a pour effet d'entraîner la pièce de sortie du frein en sens inverse du sens d'enroulement, ce qui a pour effet de freiner instantanément le tube d'enroulement. La partie terminale du store ou du volet roulant est ainsi maintenue sous tension, cette tension relativement importante étant préjudiciable au store, respectivement au volet roulant.

La présente invention vise principalement à obvier à cet inconvénient.

A cet effet, le frein selon l'invention est caractérisé en ce que, dans la zone du ressort, l'une au moins des parties en forme de secteur de cylindre des pièces d'entrée et de sortie s'étend sur un angle sensiblement inférieur au reste de ladite partie, de telle sorte que lors de la rotation de la pièce de sortie en sens inverse, elle ne rencontre le ressort qu'au bout d'une certaine rotation, le freinage ne se faisant donc qu'au bout de cette rotation.

Dès lors, lorsque le store ou le volet roulant arrive en butée contre le caisson, le tube d'enroulement peut tourner en sens inverse d'un certain angle, avant freinage, de telle sorte que la tension résiduelle sur le store ou le volet roulant est réduite à une valeur qui peut être proche de zéro.

Le ressort et les pièces d'entrée et de sortie peuvent être disposés à l'intérieur ou à l'extérieur de la pièce cylindrique. Dans le premier cas, les parties en forme de secteur de cylindre peuvent être pleines ou tubulaires.

Le dessin annexé représente, à titre d'exemple, deux modes d'exécution du frein selon l'invention.

La figure 1 est une vue en perspective du premier mode d'exécution, le carter coupé axialement.

La figure 2 est une vue frontale en coupe selon II-II de la figure 1 montrant le frein dans une position transitoire.

La figure 3 est une vue analogue à celle de la figure 2 montrant le frein à la fin de la position transitoire.

La figure 4 est une vue analogue montrant le frein dans une position intermédiaire pendant la récupération du jeu.

La figure 5 représente le frein en fin de récupération du jeu.

La figure 6 est une vue en coupe du second mode d'exécution.

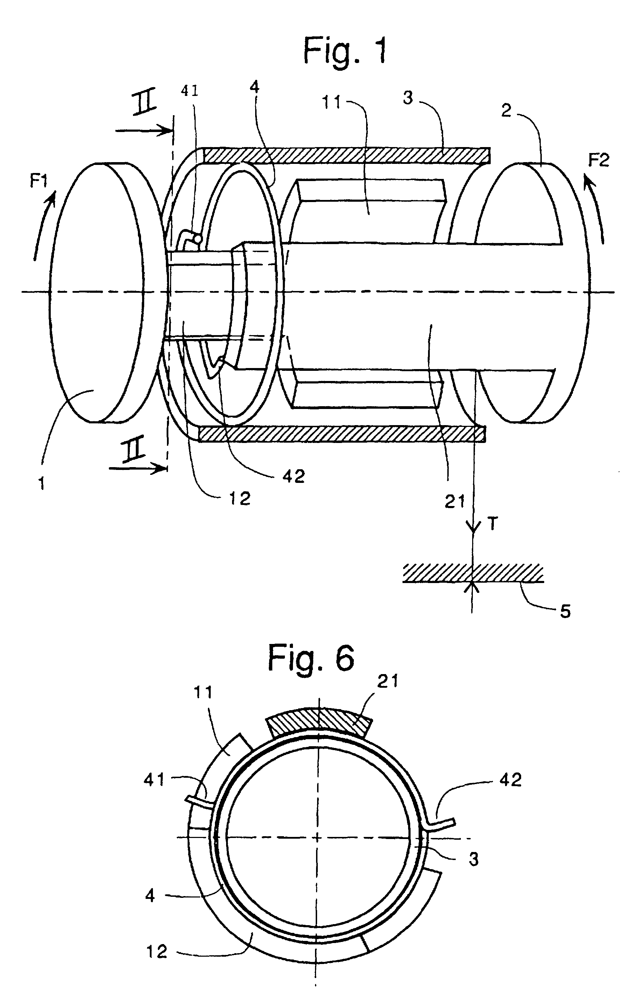

Le frein représenté à la figure 1 comprend une pièce d'entrée 1 et une pièce de sortie 2. Lors de l'entraînement d'un volet roulant, la pièce 1 est menante et la pièce 2 est menée. La pièce 1 présente une partie 11 en forme de secteur de cylindre logée coaxialement dans un carter tubulaire fixe 3. La pièce 2 présente également une partie 21 en forme de secteur de cylindre logée dans le carter 3, coaxialement à ce dernier. Les parties cylindriques 11 et 21 présentent les mêmes rayons intérieurs et extérieurs et leur diamètre extérieur est sensiblement inférieur au diamètre intérieur du carter 3. La partie 11 s'étend sur un peu moins de 180°, tandis que la partie 21 s'étend sur environ 45°. La rotation de la pièce 1 a donc pour effet d'entraîner la pièce 2 dans un sens ou dans l'autre.

Le frein est constitué d'un ressort hélicoïdal 4 présentant, à l'état libre, un diamètre extérieur sensiblement égal au diamètre intérieur du carter 3. Les extrémités 41 et 42 du ressort 4 sont coudées radialement en direction de l'axe du carter 3 et pénètrent dans l'enveloppe cylindrique des parties 11 et 21, de telle sorte qu'elles se trouvent sur la trajectoire des parties 12 et 21 lors de la rotation de celles-ci. Le ressort 4 est monté du côté de l'entrée du frein et dans la zone où s'étend le ressort 4, la partie initiale 12 de la partie cylindrique 11 de la pièce d'entrée s'étend sur un angle sensiblement inférieur au reste de la partie 11. Dans l'exemple représenté, cet angle est d'environ 45 °.

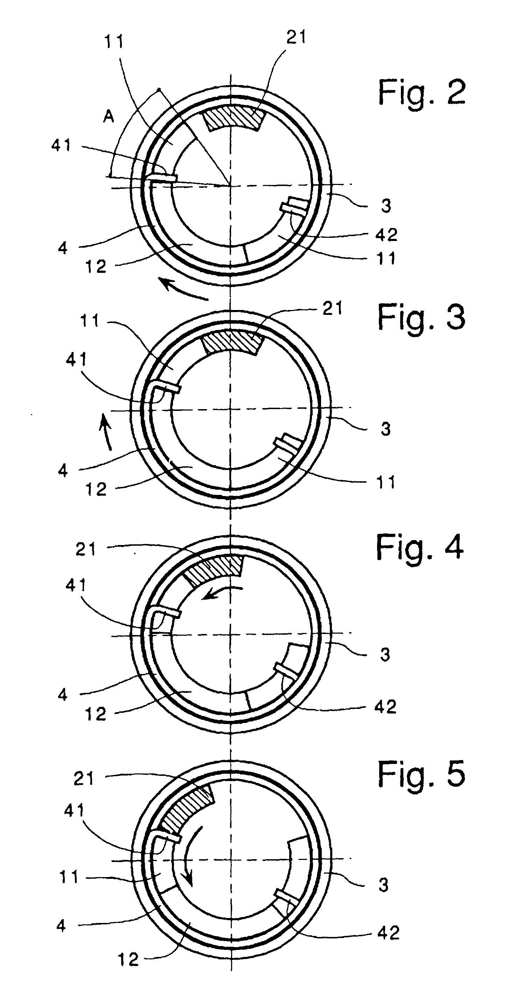

Le fonctionnement du frein sera décrit dans une application à l'entraînement d'un volet roulant monté dans un caisson. La rotation de la pièce d'entrée 1 dans le sens de la flèche F1, sens des aiguilles d'une montre sur les figures 2 à 5, sera considérée comme correspondant au sens de l'enroulement. En partant de la position représentée à la figure 1, la partie 12 viendra rapidement rencontrer l'extrémité 41 du ressort 4. Cette position est représentée à la figure 2. Au bout d'un certain angle de rotation, la partie 11 viendra rencontrer et entraîner la partie 21. Cette position est représenté à la figure 3. Le ressort 4, entraîné dans le sens d'un resserrement, glisse contre le carter 3 avec un frottement minimum. En fin de course, le volet roulant, complètement enroulé, vient buter contre son caisson schématisé par la butée 5, le moteur s'arrête et avec lui la pièce d'entrée 1. Compte tenu de l'inertie de l'entraînement, le volet roulant est soumis à une tension T qui a tendance à entraîner le volet roulant et la pièce de sortie 2, qui lui est cinématiquement liée, dans le sens F2 opposé à F1, en entraînant la pièce d'entrée 1. Cette contre-rotation est représentée aux figures 4 et 5. On voit que cette contre-rotation a lieu sur un angle A, correspondant au rétrécissement angulaire de la partie 12 relativement à la partie 11, avant que la partie 21 de la pièce de sortie ne vienne rencontrer l'extrémité 41 du ressort et l'entraîner dans le sens de l'expansion du ressort qui est alors appliqué, de manière connue, contre la paroi du carter 3 et freine.

La contre-rotation de la partie 21 de la pièce de sortie, de la position représentée à la figure 3 à la position de la figure 5, a pour effet de relâcher la tension T sur le volet roulant.

Au lieu de freiner par l'expansion d'un ressort hélicoïdal dans un tube, on pourrait freiner par la contraction d'un ressort hélicoïdal autour d'une pièce cylindrique, tubulaire ou pleine.

Un tel mode d'exécution est représenté à la figure 6 selon une vue et dans une position des pièces d'entrée et de sortie analogues à celles représentées à la figure 2. Pour bien souligner l'analogie et éviter des répétitions, les pièces correspondantes ont été désignées par les mêmes références. La pièce cylindrique 3 n'est plus un carter, mais sa fonction reste la même. Les parties 11 et 12 de la pièce d'entrée et la partie 21 de la pièce de sortie entourent la pièce cylindrique 3 avec un espace dans lequel est logé le ressort hélicoïdal 4 dont le diamètre intérieur est sensiblement égal au diamètre extérieur de la pièce 3. Ce ressort devant être resserré lorsque la partie 21 vient repousser l'extrémité coudée 41 du ressort, le ressort est enroulé autour de la pièce 3 en sens opposé à celui du ressort du premier mode d'exécution. Pour le reste, le fonctionnement est le même que celui du premier mode d'exécution.

De nombreuses variantes d'exécution sont possibles en ce qui concerne les pièces d'entrée et de sortie. En particulier, la partie 21 pourrait également être angulairement raccourcie dans la zone du ressort. La pièce d'entrée ou la pièce de sortie pourraient être constituées d'une pièce cylindrique massive, comme représenté dans la demande de brevet DE 35 04 489 ou en forme de cylindre creux muni d'une nervure, comme dans le réducteur représenté dans la demande de brevet FR 96 06552.

## Revendications

1. Frein destiné à être monté entre un arbre menant et un arbre mené et comprenant une pièce cylindrique fixe (3), une pièce d'entrée (1) présentant une partie (11) en forme de secteur de cylindre concentrique à ladite pièce cylindrique (3), une pièce de sortie (2) présentant, une partie en forme de secteur de cylindre (21) concentrique à ladite pièce cylindre (3) et s'étendant sur un angle inférieur à l'angle de la partie correspondante (11) de la pièce d'entrée, de manière à être entraînée en rotation par la pièce d'entrée, et un ressort hélicoïdal (4) monté concentriquement à la pièce cylindrique, entre cette dernière et les parties cylindriques des pièces d'entrée et de sortie et dont le diamètre est tel que le ressort est, au repos, au moins approximativement en appui contre ladite pièce cylindrique et dont au moins une extrémité (41) est coudée au moins approximativement radialement de manière à pouvoir être entraînée par lesdites parties en forme de secteur de cylindre, l'espace radial entre la pièce cylindrique et les pièces d'entrée et de sortie permettant une variation du diamètre du ressort, l'entraînement de l'extrémité coudée du ressort par la pièce d'entrée ayant tendance à écarter le ressort de la pièce cylindrique, tandis que i'entraînement de cette extrémité, en sens inverse, par la pièce de sortie (2), a pour effet d'appliquer le ressort contre la pièce cylindrique , **caractérisé en ce que**, dans la zone du ressort (4), l'une au moins (12) des parties en forme de secteur de cylindre des pièces d'entrée et de sortie s'étend sur un angle sensiblement inférieur au reste de ladite partie (11), de telle sorte que lors de la rotation de la pièce de sortie (2) en sens inverse, cette dernière ne rencontre le ressort qu'au bout d'une certaine rotation, le freinage ne se faisant qu'au bout de cette rotation.

## Patentansprüche

1. Bremse, die dazu bestimmt ist, zwischen einer treibenden und einer getriebenen Welle montiert zu werden, mit einem festen zylindrischen Stück (3), mit einem Eingangsstück (1), das einen Teil (11) in Form eines zum erwähnten zylindrischen Stück (3) konzentrischen zylindrischen Abschnitts aufweist, mit einem Ausgangsstück (2), das einen Teil (21) in Form eines zum erwähnten zylindrischen Stück (3) konzentrischen zylindrischen Abschnitts aufweist und sich über einen Winkel erstreckt, der kleiner ist als der Winkel des entsprechenden Teils (11) des Eingangsstücks (1), derart, dass er durch das Eingangsstück in Drehung versetzbar ist, und mit einer Schraubenfeder (4), die, konzentrisch zum zylindrischen Stück, zwischen diesem und den zylindrischen Teilen der Eingangs- und Ausgangsstücke montiert ist und deren Durchmesser so gewählt ist, dass die Feder in Ruhestellung wenigstens näherungsweise an dem erwähnten zylindrischen Stück anliegt, wobei wenigstens ein Federende (41) wenigstens näherungsweise radial umgebogen ist, so dass es von den erwähnten Teilen in Form zylindrischer Abschnitte mitgenommen werden kann, wobei der radiale Raum zwischen dem zylindrischen Stück und den Eingangs- und Ausgangsstücken eine Änderung des Federdurchmessers erlaubt und die Mitnahme des gebogenen Federendes durch das Eingangsstück die Tendenz hat, die Feder vom zylindrischen Stück zu entfernen, während die Mitnahme dieses Endes im entgegengesetzten Sinne durch das Ausgangsstück (2) bewirkt, dass die Feder gegen das zylindrische Stück gedrückt wird, **dadurch gekennzeichnet, dass** sich im Bereich der Feder (4) wenigstens eines (12) der Teile in Form eines zylindrischen Abschnitts der Eingangs- und Ausgangsstücke über einen Winkel erstreckt, der merklich kleiner ist als der Rest des erwähnten Teils (11), derart, dass bei der Drehung des Ausgangsstücks (2) im umgekehrten Sinne dieses nur am Ende einer bestimmten Drehung auf die Feder trifft, wobei die Bremsung nur am Ende dieser Drehung stattfindet.

## Claims

1. Brake intended to be mounted between a driving shaft and a driven shaft and comprising a fixed cylindrical piece (3), an input piece (1) having a part (11) in the form of a sector of a cylinder concentric with the said cylindrical piece (3), an output piece (2) having a part in the form of a sector of a cylinder (21) concentric with the said cylinder piece (3) and extending over a smaller angle than the angle of the corresponding part (11) of the input piece so as to be driven in rotation by the input piece, and a helical spring (4) mounted concentrically with the cylindrical piece between the latter and the cylindrical parts of the input and output pieces and the diameter of which is such that the spring is, at rest, at least approximately bearing against the said cylindrical piece and at least one end (41) of which is elbowed at least approximately radially so as to be able to be driven by the said parts in the form of sectors of a cylinder, the radial space between the cylindrical piece and the input and output pieces allowing the diameter of the spring to vary, the driving of the elbowed end of the spring by the input piece having a tendency to move the spring away from the cylindrical piece, while the driving of this end, in the opposite direction, by the output piece (2) has the effect of pressing the spring against the cylindrical piece, **characterized in that**, in the region of the spring (4), at least one (12) of the parts in the form of a sector of a cylinder of the input and output pieces extends over an angle appreciably smaller than the rest of the said part (11) so that as the output piece (2) rotates in the opposite direction, this piece encounters the spring only after it has rotated through a certain amount, braking occurring only after rotation through this amount.
